# EUROPÄISCHE PATENTANMELDUNG

(11) **EP 3 719 380 A1**
(43) Veröffentlichungstag der Anmeldung: **07.10.2020**
(21) Anmeldenummer: 19020264.8
(22) Anmeldetag: 05.04.2019
(51) Int. Cl.: F17C 5/02, F17C 6/00

(54) **VERFAHREN ZUM ABKÜHLEN EINER TRANSFERVORRICHTUNG UND TRANSFERVORRICHTUNG ZUM UMFÜLLEN VON VERFLÜSSIGTEM GAS**

(71) Anmelder: Linde GmbH, 82049 Pullach (DE)
(72) Erfinder: Posselt, Heinz, 83043 Bad Aibling (DE); Ehegartner, Florian, 84524 Neuötting (DE)
(74) Vertreter: Meilinger, Claudia Sabine

(57) **Zusammenfassung**

Die Erfindung betrifft ein Verfahren zum Abkühlen einer Transfervorrichtung (200), die zum Umfüllen von verflüssigtem Gas aus einem ersten Behälter in einen zweiten Behälter dient, wobei Gas aus dem ersten Behälter durch eine Hinleitung (210) der Transfervorrichtung (200) in Richtung des zweiten Behälters geführt wird, wobei das Gas nach zumindest teilweisem Durchlaufen der Hinleitung (210) zumindest teilweise durch eine Rückleitung (220) der Transfervorrichtung (200) zurück in den ersten Behälter geführt wird, sowie eine solche Transfervorrichtung (200)

## Beschreibung

Die Erfindung betrifft ein Verfahren zum Abkühlen einer Transfervorrichtung, die zum Umfüllen von verflüssigtem Gas aus einem ersten Behälter in einen zweiten Behälter dient, sowie eine solche Transfervorrichtung zum Umfüllen von verflüssigtem Gas.

Verflüssigtes Gas wie Wasserstoff wird typischerweise in Behältern oder Tanks gelagert, die meist mittels Vakuum isoliert sind. Zusätzlich kann ein Kühlschild vorgesehen sein, das mittels Stickstoff gekühlt wird. Für einen Transport von Wasserstoff bzw. allgemein verflüssigtem Gas können solche Behälter oder Tanks auch auf Fahrzeugen oder Schiffen vorgesehen sein.

Im Rahmen des Transports kann es nötig werden, das verflüssigte Gas von einem Behälter bzw. Tank in einen anderen Behälter bzw. Tank umzufüllen. Hierzu können Transfervorrichtungen mit einer, typischerweise mittels Vakuum, isolierten Leitung für Gas bzw. verflüssigtes Gas verwendet werden. Damit das Gas letztlich auch in verflüssigter Form über die Transfervorrichtung umgefüllt werden kann, muss diese Transvorrichtung bzw. die Leitung entsprechend abgekühlt werden. Hierzu wird typischerweise Gas aus dem ersten Behälter, von dem das verflüssigte Gas in einen anderen Behälter umgefüllt werden soll, entnommen und durch die Leitung geführt.

Vor diesem Hintergrund stellt sich die Aufgabe, eine Möglichkeit bereitzustellen, ein Umfüllen von verflüssigtem Gas aus einem ersten Behälter in einen zweiten Behälter, insbesondere auch das hierzu nötige Abkühlen einer Transfervorrichtung, schneller und/oder effizienter zu gestalten.

### Offenbarung der Erfindung

Diese Aufgabe wird durch einen Transportbehälter mit den Merkmalen der unabhängigen Patentansprüche gelöst. Bevorzugte Ausgestaltungen sind Gegenstand der abhängigen Patentansprüche sowie der nachfolgenden Beschreibung.

### Vorteile der Erfindung

Die Erfindung geht aus von einem Verfahren zum Abkühlen einer Transfervorrichtung, die zum Umfüllen von verflüssigtem Gas aus einem ersten Behälter in einen zweiten Behälter dient. Als verflüssigtes Gas kommt dabei besonders bevorzugt Wasserstoff bzw. verflüssigter Wasserstoff in Betracht. Nichtsdestotrotz können auch andere Gase wie Helium in Betracht gezogen werden bzw. das Verfahren kann auch für Helium verwendet werden.

Als Behälter bzw. Tanks kommen dabei insbesondere stationäre oder mobile Behälter in Betracht. Zweckmäßig ist es beispielsweise, das verflüssigte Gas von einem stationären Behälter in einen mobilen Behälter, der insbesondere auf einem Fahrzeug oder einem Schiff angeordnet ist, zum Transport umzufüllen. Umgekehrt kann nach dem Transport das verflüssigte GAs dann auch wieder zurück in einen stationären Behälter, ggf. aber auch einen anderen mobilen Behälter umgefüllt werden.

Wie eingangs bereits erwähnt, weist eine solche Transfervorrichtung eine, insbesondere isolierte, Leitung für Gas bzw. verflüssigtes Gas auf, über welche das verflüssigte Gas vom ersten in den zweiten Behälter geführt bzw. transportiert wird. Insofern kann dabei von der Leitung als Hinleitung gesprochen werden. Damit das Gas allerdings überhaupt in verflüssigter bzw. flüssiger Form über die Transfervorrichtung bzw. Hinleitung geführt bzw. umgefüllt werden kann, muss diese zunächst abgekühlt werden, und zwar so weit, dass das verflüssigte Gas darin nicht mehr verdampft.

Hierzu wird Gas aus dem ersten Behälter durch die Hinleitung der Transfervorrichtung in Richtung des zweiten Behälters geführt. Dies kann im einfachsten Fall dadurch erfolgen, dass eine geeignete Verbindung zwischen der Hinleitung und dem ersten Behälter hergestellt wird, beispielsweise mittels eines geeigneten Anschlussmittels, das zweckmäßigerweise ein Ventil aufweist. Ein Teil des verflüssigten Gases im ersten Behälter verdampft dann (sog. Boiloff-Gas) und das - dann gasförmige - Gas wird durch die Hinleitung geführt. Auf diese Weise wird die Hinleitung abgekühlt. Am Ende der Hinleitung entweicht dieses Gas dann bisher - im Sinne von Abgas - entweder an die Umgebung, ggf. auch zunächst in den zweiten Tank und von dort dann an die Umgebung, oder aber wird, insbesondere bei für die Umwelt gefährlichen Gasen, entsprechend entsorgt.

Erfindungsgemäß ist nun vorgesehen, dass das Gas nach zumindest teilweisem Durchlaufen der Hinleitung zumindest teilweise durch eine Rückleitung der Transfervorrichtung zurück in den ersten Behälter geführt wird. Das zum Abkühlen der Hinleitung verwendete Gas wird somit nicht einfach entsorgt, was einen gewissen Verlust bedeutete, sondern kann im ersten Behälter zum - zumindest zeitweisen - Druckaufbau bzw. einer Erhöhung des Drucks verwendet werden. Durch eine solche Erhöhung des Drucks im ersten Behälter kann die Abkühlung der Hinleitung und damit anschließend der Transfer von verflüssigtem Gas beschleunigt werden. Damit wird das Gas nicht nur nicht entsorgt, sondern zugleich für eine Beschleunigung des gesamten Umfüllvorgangs verwendet.

Nach dem Abkühlen der Hinleitung, d.h. wenn die Hinleitung zumindest soweit abgekühlt ist, dass ein Transfer von verflüssigtem Gas möglich ist, kann die Rückführung von Gas über die Rückleitung gestoppt bzw. unterbunden werden, beispielsweise durch Absperren eines geeigneten Ventils, wie später noch näher erläutert wird. Denkbar ist allerdings auch, dass - bei geeigneter Ausgestaltung der Transfervorrichtung - die Rückleitung während des Transfers von verflüssigtem Gas verwendet wird, um etwaiges, im zweiten Behälter verdampftes Gas in den ersten Behälter zurückgeführt wird.

Je nach konkretem Aufbau der Transfervorrichtung mit Hinleitung und Rückleitung kann das über die Rückleitung geführte Gas zudem zu einer noch besseren Abkühlung der Transfervorrichtung und insbesondere der Hinleitung dienen. Zweckmäßig ist insofern auch, wenn eine Transfervorrichtung verwendet wird, bei der die Hinleitung und die Rückleitung in oder an einem gemeinsamen Arm und/oder Turm, beispielsweises einem Arm bzw. Turm eines Krans oder dergleichen, wie später noch näher erläutert, vorgesehen sind.

Besonders bevorzugt ist es, wenn das Gas nach teilweisem Durchlaufen der Hinleitung und vor Erreichen eines Endes der Hinleitung in die Rückleitung geführt wird. Insbesondere kann vorgesehen sein, das Gas erst kurz vor Erreichen des Endes bzw. eines Endstücks der Hinleitung in die Rückleitung abzuzweigen. Dann kann das Gas vollständig in die Rückleitung geführt werden, während zugleich ein Abkühlen (fast) der gesamten Hinleitung erreicht wird.

Vorteilhafterweise wird eine Transfervorrichtung verwendet, bei der die Hinleitung und die Rückleitung getrennt voneinander oder gemeinsam mittels Vakuum isoliert sind. Insbesondere bei einer gemeinsamen Isolierung kann eine besonders schnelle Abkühlung erreicht werden, da das Gas in der Rückleitung die Hinleitung weiterhin kühlen bzw. bei der Kühlung unterstützen kann. Bei getrennter Isolation hingegen ist kein Wärmeeintrag durch die Rückleitung, wenn diese nach dem Abkühlen nicht mehr verwendet wird, vorhanden oder hat zumindest geringere Auswirkungen.

Gegenstand der Erfindung ist weiterhin eine Transfervorrichtung zum Umfüllen von verflüssigtem Gas aus einem ersten Behälter in einen zweiten Behälter. Die Transfervorrichtung weist eine Hinleitung zur Führung von Gas aus dem ersten Behälter in den zweiten Behälter auf sowie ein erstes Anschlussmittel, das zum Anschließen der Hinleitung an den ersten Behälter eingerichtet ist. Hierbei kann es sich in einem einfachen Fall beispielsweise um eine Kupplung mit Flansch handeln. Zweckmäßig ist auch, wenn in der Hinleitung, insbesondere nahe des ersten Anschlussmittels ein Ventil, insbesondere ein handbetätigbares Ventil, vorgesehen ist.

Weiterhin weist die Transfervorrichtung ein Endstück auf, das zum Einbringen von Gas aus der Hinleitung in den zweiten Behälter eingerichtet ist. Zudem weist die Transfervorrichtung eine Rückleitung zur Führung von Gas nach zumindest teilweisem Durchlaufen der Hinleitung zurück in den ersten Behälter, und ein zweites Anschlussmittel, das zum Anschließen der Rückleitung an den ersten Behälter eingerichtet ist, auf. Bei dem zweiten Anschlussmittel kann es sich in einem einfachen Fall beispielsweise ebenfalls um eine Kupplung mit Flansch handeln. Zweckmäßig ist auch hier, wenn in der Rückleitung, insbesondere nahe des zweiten Anschlussmittels ein Ventil, insbesondere ein handbetätigbares Ventil, vorgesehen ist.

Besonders bevorzugt ist die Rückleitung zwischen dem ersten Anschlussmittel und dem Endstück mit der Hinleitung verbunden, insbesondere nahe oder kurz vor dem Endstück. Damit kann das Gas vollständig in die Rückleitung geführt werden, während zugleich ein Abkühlen (fast) der gesamten Hinleitung erreicht wird.

Vorzugsweise weisen die Hinleitung und/oder die Rückleitung in einem dem zweiten Behälter zuzuwendenden Endbereich ein Absperrventil auf. Damit kann die Transfervorrichtung bei Bedarf geschlossen werden. Insbesondere die Rückleitung kann durch das Absperrventil bei Bedarf, beispielsweise nach dem Abkühlen der Hinleitung bzw. der Transfervorrichtung, geschlossen werden, sodass darüber kein Gas mehr zurück in den ersten Behälter strömt, was - insbesondere beim Transfer von verflüssigtem Gas - eine Verzögerung hervorrufen könnte.

Sowohl das Absperrventil der Hinleitung als auch das Absperrventil der Rückleitung können bevorzugt fernbetätigbar sein bzw. ausgebildet sein, insbesondere hydraulisch oder pneumatisch oder elektrisch. Dies ist insofern vorteilhaft, als das betreffende Ender der Transfervorrichtung typischerweise nicht oder nicht einfach für Personen zugänglich ist, damit die Ventile aber trotzdem einfach, schnell und sicher betätigt werden können.

Es ist von Vorteil, wenn das Endstück einen flexiblen Schlauch und/oder ein drittes Anschlussmittel, das zum Anschließen der Hinleitung an den zweiten Behälter eingerichtet ist, aufweist. Ein flexibler Schlauch kann besonders einfach in eine geeignete Öffnung in dem zweiten Behälter eingebracht werden. Falls gewünscht oder nötig, kann mittels eines dritten Anschlussmittels, beispielsweise ebenfalls eine Kupplung mit Flansch, eine sicherere Verbindung hergestellt werden. Denkbar ist aber auch, dass das Endstück oder ein Teil davon austauschbar ausgebildet ist, sodass auf verschiedene Situationen hinsichtlich eines etwaigen Anschlusses oder einer Einfüllöffnung am zweiten Behälter reagiert werden kann.

Wie erwähnt, kann die Rückleitung vor bzw. kurz vor dem Endstück an die Hinleitung angebunden sein bzw. davon abzweigen. Falls, wie vorstehend schon erwähnt, jedoch gewünscht ist, auch während des Transfers von verflüssigtem Gas etwaiges verdampftes Gas vom zweiten in den ersten Behälter zurückzuführen, so kann auch vorgesehen sein, dass die Rückleitung wie auch die Hinleitung bis zum Ende des Endstücks reicht. Zwischen Hinleitung und Rückleitung kann dann eine, insbesondere absperrbare, Verbindung vorgesehen sein.

Hinsichtlich weiterer Ausgestaltungen und Vorteile der Transfervorrichtung sei auch auf obige Ausführungen zum Verfahren verwiesen, die hier entsprechend gelten.

Gegenstand der Erfindung ist auch eine Verwendung einer erfindungsgemäßen Transfervorrichtung zum Umfüllen von verflüssigtem Gas aus einem ersten Behälter in einen zweiten Behälter, insbesondere bei einem erfindungsgemäßen Verfahren.

Die Erfindung ist anhand eines Ausführungsbeispiels in der Zeichnung schematisch dargestellt und wird im Folgenden unter Bezugnahme auf die Zeichnung beschrieben.

Kurze Beschreibung der Zeichnung
- Figur 1: zeigt schematisch eine Anordnung mit einer erfindungsgemäßen Transfervorrichtung in einer bevorzugten Ausführungsform.
- Figur 2: zeigt schematisch eine erfindungsgemäße Transfervorrichtung in einer bevorzugten Ausführungsform.
- Figur 3: zeigt schematisch eine erfindungsgemäße Transfervorrichtung in einer weiteren bevorzugten Ausführungsform.

### Ausführliche Beschreibung der Zeichnung

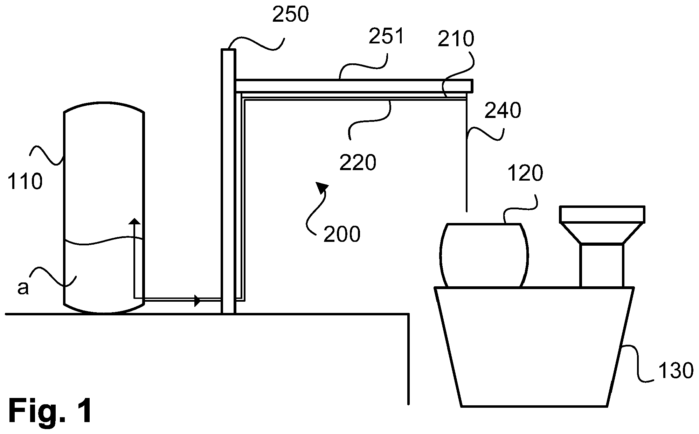

In Figur 1 ist schematisch eine Anordnung mit einer erfindungsgemäßen Transfervorrichtung 200 in einer bevorzugten Ausführungsform dargestellt. Hierbei sind ein erster Behälter 110, der als stationärer Behälter ausgebildet ist, sowie ein zweiter Behälter 120, der als mobiler Behälter ausgebildet ist, der auf einem Schiff 130 angeordnet ist, vorgesehen. Beide Behälter 210 und 220 sind dabei zum Aufnehmen und Lagern von verflüssigtem Gas a, insbesondere verflüssigtem Wasserstoff, eingerichtet.

Die Transfervorrichtung 200 weist eine Hinleitung 210 und eine Rückleitung 220 auf, die zusammen in bzw. an einem gemeinsamen Arm 251 vorgesehen bzw. angeordnet sind. Bei dem Arm 251 handelt es sich vorliegend um einen Arm, der an einem Trum 250 angeordnet ist, beispeilsweise auch drehbar. Insgesamt bilden der Turm 250 und der Arm 251 somit eine Art Kran.

Die Hinleitung 210 und die Rückleitung 220 sind jeweils auf geeignete Weise an dem ersten Behälter 110 angeschlossen, sodass einerseits Gas aus dem ersten Behälter 110 in die Hinleitung 210 geführt und andererseits Gas aus der Rückleitung 220 in den ersten Behälter 110 geführt werden können.

Weiterhin ist an dem dem zweiten Behälter 120 zugewandten Ende der Transfervorrichtung 200 ein Endstück 240 vorgesehen, beispielsweise in Form eines Schlauches, das bzw. der in eine geeignete Öffnung in dem zweiten Behälter 120 eingebracht werden kann. Für eine nähere Beschreibung der Transfervorrichtung und ihrer Funktionsweise sei auf die nachfolgende Figur mit zugehöriger Beschreibung verwiesen.

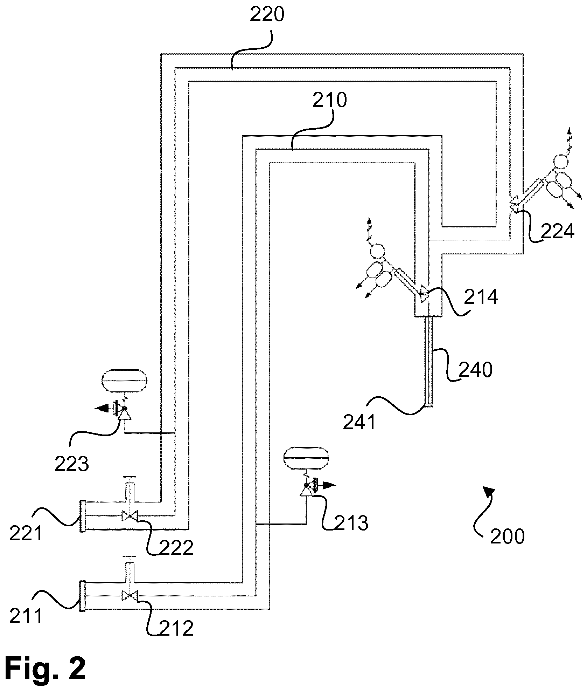

In Figur 2 ist schematisch eine erfindungsgemäße Transfervorrichtung 200 in einer bevorzugten Ausführungsform dargestellt, bei der es sich insbesondere um die in Figur 1 gezeigte Transfervorrichtung handeln kann. Insbesondere sind hierbei die Hinleitung 210, die Rückleitung 220 sowie Anschlüsse und Ventile gezeigt.

An der Hinleitung 210 - die insbesondere mittels Vakuum isoliert ist - ist an dem dem ersten Behälter zuzuwendenden Ende ein Anschlussmittel 211 vorgesehen, beispielsweise in Form einer Kupplung mit Flansch. Zudem ist, kurz hinter dem Anschlussmittel 211 ein Absperrventil 212 vorgesehen, das beispielsweise handbetätigbar sein kann. Im weiteren Verlauf kann optional ein Entlüftungsventil 213 vorgesehen sein.

An dem anderen, dem zweiten Behälter zuzuwenden Ende der Hinleitung 210 ist ein Endstück 240 vorgesehen, bei dem es sich um einen Schlauch handeln kann. Denkbar ist, dass auch ein drittes Anschlussmittel 241 vorgesehen ist, womit beispielsweise eine sichere Verbindung zu dem zweiten Behälter hergestellt werden kann. Vor dem Endstück 240 ist in der Hinleitung 210 ein Absperrventil 214 vorgesehen, das insbesondere fernbetätigbar sein kann.

An der Rückleitung 220 - die insbesondere ebenfalls mittels Vakuum isoliert ist - ist an dem dem ersten Behälter zuzuwendenden Ende ein Anschlussmittel 221 vorgesehen, beispielsweise in Form einer Kupplung mit Flansch. Zudem ist, kurz hinter dem Anschlussmittel 221, ein Absperrventil 222 vorgesehen, das beispielsweise ebenfalls handbetätigbar sein kann. Im weiteren Verlauf kann optional ein Entlüftungsventil 223 vorgesehen sein.

An dem anderen, dem zweiten Behälter zuzuwenden Ende ist die Rückleitung 220, vor dem Endstück 240, an die Hinleitung 210 angeschlossen bzw. sie zweigt von dieser ab. Zudem ist in der Rückleitung 220 ein Absperrventil 224 vorgesehen, das insbesondere ebenfalls fernbetätigbar sein kann.

Mit dieser Transfervorrichtung 200 - etwaige Haltevorrichtungen wie ein Arm oder Turm gemäß Figur 1 sind hier der Übersichtlichkeit halber nicht dargestellt - kann vor einem Umfüllen von verflüssigtem Gas wie Wasserstoff von dem ersten Behälter in den zweiten Behälter zunächst die Hinleitung 210 abgekühlt werden, indem Gas durch die Hinleitung 210 und dann über die Rückleitung 220 zurück in den ersten Behälter geführt wird. Hierzu können die Ventile 211, 221 und 224 geöffnet werden, das Ventil 214 hingegen sollte geschlossen bleiben. Nach ausreichender Abkühlung können die Ventile 221 und 224 geschlossen, das Ventil 214 hingegen geöffnet werden, sodass verflüssigtes Gas durch die Hinleitung 210 in den zweiten Behälter geführt werden kann.

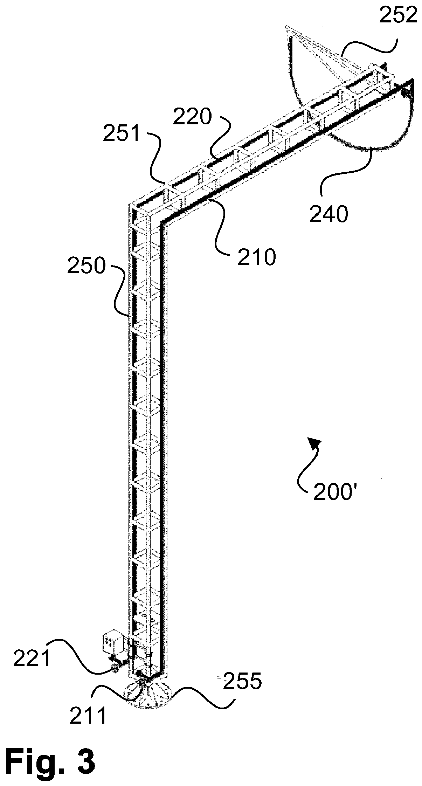

In Figur 3 ist schematisch eine erfindungsgemäße Transfervorrichtung 200' in einer weiteren bevorzugten Ausführungsform dargestellt, insbesondere in einer perspektivischen Ansicht. Der grundlegende Aufbau der Transfervorrichtung 200' entspricht derjenigen der Transfervorrichtung 200 gemäß den Figuren 1 und 2, sodass insofern auch auf die dortige Beschreibung verwiesen werden kann, zumal gleiche Komponenten mit gleichen Bezugszeichen bezeichnet sind.

Ergänzend ist hier nun jedoch eine Drehscheibe bzw. ein Drehkranz 255 dargestellt, mittels welcher der Turm 250 und damit die gesamte Transfervorrichtung 200' drebhar bzw. rotierbar sind. Zudem ist ein Schwenkarm 252 am Ende des Arms 251 dargestellt, mittels dessen das Endstück bzw. der Schlauch 240 gezielt positioniert werden kann, um ihn beispielsweise schnell und gezielt in eine entsprechende Öffnung am zweiten Behälter einbringen zu können.

## Patentansprüche

1. Verfahren zum Abkühlen einer Transfervorrichtung (200, 200'), die zum Umfüllen von verflüssigtem Gas (a) aus einem ersten Behälter (110) in einen zweiten Behälter (120) dient, wobei Gas (a) aus dem ersten Behälter (110) durch eine Hinleitung (210) der Transfervorrichtung (200, 200') in Richtung des zweiten Behälters (120) geführt wird,
**dadurch gekennzeichnet, dass** das Gas (a) nach zumindest teilweisem Durchlaufen der Hinleitung (210) zumindest teilweise durch eine Rückleitung (220) der Transfervorrichtung (200, 200') zurück in den ersten Behälter (110) geführt wird.

2. Verfahren nach Anspruch 1, wobei das Gas (a) nach teilweisem Durchlaufen der Hinleitung (210) und vor Erreichen eines Endes der Hinleitung (210) in die Rückleitung (220) geführt wird.

3. Verfahren nach Anspruch 1 oder 2, bei dem eine Transfervorrichtung (200, 200') verwendet wird, bei der die Hinleitung (200210 und die Rückleitung (220) in oder an einem gemeinsamen Arm (251) und/oder Turm (250) vorgesehen sind.

4. Verfahren nach einem der vorstehenden Ansprüche, bei dem eine Transfervorrichtung (200, 200') verwendet wird, bei der die Hinleitung (210) und die Rückleitung (220) getrennt voneinander oder gemeinsam mittels Vakuum isoliert sind.

5. Verfahren nach einem der vorstehenden Ansprüche, wobei verflüssigter Wasserstoff als verflüssigtes Gas (a) verwendet wird.

6. Verfahren nach einem der vorstehenden Ansprüche, bei dem ein stationärer oder ein mobiler Behälter als erster Behälter (110) verwendet wird.

7. Verfahren nach einem der vorstehenden Ansprüche, bei dem ein mobiler Behälter, der insbesondere auf einem Fahrzeug oder einem Schiff (130) angeordnet ist, als zweiter Behälter (120) verwendet wird.

8. Transfervorrichtung (200, 200') zum Umfüllen von verflüssigtem Gas (a) aus einem ersten Behälter (110) in einen zweiten Behälter (120), mit einer Hinleitung (210) zur Führung von Gas (a) aus dem ersten Behälter (110) in den zweiten Behälter (120), mit einem ersten Anschlussmittel (211), das zum Anschließen der Hinleitung (210) an den ersten Behälter (110) eingerichtet ist, mit einem Endstück (240), das zum Einbringen von Gas (a) aus der Hinleitung (210) in den zweiten Behälter (120) eingerichtet ist,
**gekennzeichnet durch** eine Rückleitung (220) zur Führung von Gas (a) nach zumindest teilweisem Durchlaufen der Hinleitung (210) zurück in den ersten Behälter (110), und durch ein zweites Anschlussmittel (221), das zum Anschließen der Rückleitung (220) an den ersten Behälter (110) eingerichtet ist.

9. Transfervorrichtung (200, 200') nach Anspruch 8, wobei die Rückleitung (220) zwischen dem ersten Anschlussmittel (211) und dem Endstück (240) mit der Hinleitung (210) verbunden ist.

10. Transfervorrichtung (200, 200') nach Anspruch 8 oder 9, wobei die Hinleitung (210) und/oder die Rückleitung (220) in einem dem zweiten Behälter (120) zuzuwendenden Endbereich ein Absperrventil (214, 224) aufweisen.

11. Transfervorrichtung (200, 200') nach einem der Ansprüche 8 bis 10, wobei das Absperrventil (214) der Hinleitung und/oder das Absperrventil (224) der Rückleitung fernbetätigbar ist, insbesondere hydraulisch oder pneumatisch oder elektrisch.

12. Transfervorrichtung (200, 200') nach einem der Ansprüche 8 bis 11, wobei das Endstück (240) einen flexiblen Schlauch und/oder ein drittes Anschlussmittel (241), das zum Anschließen der Hinleitung (210) an den zweiten Behälter (120) eingerichtet ist, aufweist.

13. Transfervorrichtung (200, 200') nach einem der Ansprüche 8 bis 12, wobei die Hinleitung (210) und die Rückleitung (220) in einem gemeinsamen Arm (251) vorgesehen sind.

14. Transfervorrichtung (200, 200') nach einem der Ansprüche 8 bis 13, wobei die Hinleitung (210) und die Rückleitung (220) getrennt voneinander oder gemeinsam mittels Vakuum isoliert sind.

15. Verwendung einer Transfervorrichtung (200, 200') nach einem der Ansprüche 8 bis 14 zum Umfüllen von verflüssigtem Gas (a) aus einem ersten Behälter (110) in einen zweiten Behälter (120), insbesondere bei einem Verfahren nach einem der Ansprüche 1 bis 7.
